# EUROPÄISCHE PATENTSCHRIFT

(11) **EP 4 253 000 B1**
(45) Veröffentlichungstag und Bekanntmachung des Hinweises auf die Patenterteilung: **17.12.2025**
(21) Anmeldenummer: 22165459.3
(22) Anmeldetag: 30.03.2022
(51) Int. Cl.: B29C 45/76, B29C 45/57

(54) **HERSTELLUNG VON KUNSTSTOFFBAUTEILEN MIT REDUZIERTEN MIKROFEHLSTELLEN**
PRODUCTION OF PLASTIC COMPONENTS WITH REDUCED MICRODEFECTS
FABRICATION DE COMPOSANTS EN MATIÈRE PLASTIQUE À POINTS RÉDUITS DE MICRO-DÉFAUTS

(43) Veröffentlichungstag der Anmeldung: 04.10.2023
(73) Patentinhaber: ENGEL AUSTRIA GmbH, 4311 Schwertberg (AT)
(72) Erfinder: KASTNER, Clemens, 4040 Linz (AT); HÜTTLER, Matthias, 4210 Gallneukirchen (AT); CÄSAR, Bernhard, 4209 Engerwitzdorf (AT); ELLINGER, Alfred, 4311 Schwertberg (AT)
(74) Vertreter: Torggler & Hofmann Patentanwälte - Innsbruck

(56) Entgegenhaltungen:
- JP-A- H05 124 070
- JP-A- S59 214 629
- JP-A- S61 199 919
- US-A1- 2006 131 771
- US-B1- 7 037 452

## Beschreibung

Die Erfindung betrifft eine Vorrichtung zur Steuerung oder Regelung der Herstellung von Kunststoffteilen, insbesondere von optischen Elementen, in einem Kunststoff-Spritzgießverfahren oder Kunststoff-Spritzpressverfahren, ein Verfahren zur Herstellung von Kunststoffteilen, insbesondere von optischen Elementen, durch Kunststoff-Spritzgießen oder Kunststoff-Spritzpressen, ein Computerprogramm und ein Datenträgersignal.

Die Herstellung von Kunststoffteilen und insbesondere von optischen Elementen in einem Kunststoff-Spritzgießverfahren oder Kunststoff-Spritzpressverfahren ist seit langem bekannt.

Seit dem Aufkommen von Smartphones und Tablets spielt die Leistungsfähigkeit der Kameramodule dieser Geräte eine verkaufsentscheidende Rolle. Die aufgenommenen Bilder sollen dabei stets schärfer, die Lichtverhältnisse immer besser ausgeglichen und die Farbqualität noch brillanter werden. Vor dem Hintergrund, dass einzelne Kameramodule wiederum aus etlichen Linsen bestehen, kristallisiert sich die Wichtigkeit der Linsenqualität heraus.

Die Bedeutung des Spritzgießprozesses zeigt sich schon in der aktuell dominierenden Wahl der Linsen-Materialien. Leistungsstarke transparente Kunststoffe bieten essenzielle Vorteile gegenüber anderen potenziellen Werkstoffen, wie beispielsweise Glas. Hervorzuheben sind der geringere Energieeinsatz und damit geringere Herstellkosten, geringes Gewicht sowie die Möglichkeit, komplexe Strukturen oder feinstrukturierte Bereiche abbilden zu können.

Linsen bieten jedoch gleich zweierlei Raum für Fehlstellen. Einerseits kann es an der Linsenoberfläche zu Defekten wie Schlieren kommen, während andererseits auch das Linsenvolumen Platz für Lunker, oder kleinere Fehlstellen bietet. Während Lunker durch geeignete Prozessführung schon in aktuell realisierbaren Standardprozessen beseitigt werden können, stellen Schlieren und kleinere Fehlstellen den Anwender oftmals vor Probleme.

In Versuchen hat die Anmelderin eine weitere Problematik, für welche aktuell noch wenig Bewusstsein in der Industrie herrscht, identifiziert: Spritzgegossene oder spritzgepresste Kunststoffteile sind mit zahlreichen Mikrofehlstellen durchzogen. Die Detektion dieser sogenannten Mikrofehlstellen ist herausfordernd, da sie nicht durch herkömmliche lichtmikroskopische Untersuchungen sichtbar gemacht werden können.

Beispielsweise haben Versuche der Anmelderin gezeigt, dass Smartphone-Linsen, die unter dem Lichtmikroskop einwandfrei aussehen, über 1000 Mikrofehlstellen pro Linse aufweisen können.

Aus dem Stand der Technik ist es bekannt, zur Stabilisierung des Schussgewichtes die Schmelze nach dem Dosieren und vor dem Einspritzen zu komprimieren (siehe zum Beispiel US 2013 0095199 A1 und JP 3529771 B2).

In der Arbeit "Michler, G. H. und Schmeling, H.-H. K.-B. von: "The physics and micromechanics of nano-voids and nano-particles in polymer combinations", Polymer 54.13 (2013), S. 3131-3144" wurde gezeigt, dass die Hauptursache von Mikrofehlstellen die Verteilung nicht gelöster größerer Lufteinschlüsse einerseits und die Agglomeration noch kleinerer Lufteinschlüsse andererseits ist.

Es ist eine Aufgabe der Erfindung, eine Vorrichtung und ein Verfahren bereitzustellen, mit welchem die Herstellung von Kunststoffteilen, insbesondere von optischen Elementen, mit höherer Qualität ermöglicht wird. Eine weitere Aufgabe besteht in der Bereitstellung eines Computerprogramms zur Durchführung des Verfahrens und eines Datenträgersignals.

Diese Aufgabe wird durch eine Vorrichtung mit den Merkmalen des Anspruchs 1, eine Spritzgießmaschine oder Spritzpresse mit den Merkmalen des Anspruchs 7, ein Verfahren mit den Merkmalen des Anspruchs 10, ein Computerprogramm mit den Merkmalen des Anspruchs 15 und ein Datenträgersignal mit den Merkmalen des Anspruchs 16 gelöst.

Eine Vorrichtung zur Herstellung einer vorgegebenen Anzahl von Kunststoffteilen, insbesondere von optischen Elementen, pro Spritzzyklus einer Spritzgießmaschine oder Spritzpresse, weist zumindest auf:
- wenigstens einen Signalausgang, über welchen durch wenigstens eine Recheneinheit Befehle an wenigstens einen Aktuator einer Spritzgießmaschine oder Spritzpresse übermittelbar sind, welche den wenigstens einen Aktuator dazu veranlassen, eine Kompressionsbeaufschlagung einer in einem Einspritzzylinder der Spritzgießmaschine oder Spritzpresse bereitgestellten Schmelze durchzuführen
- wenigstens eine Recheneinheit, welche dazu konfiguriert ist, über den wenigstens einen Signalausgang Befehle an wenigstens einen Aktuator einer Spritzgießmaschine oder Spritzpresse zu übermitteln, welche den wenigstens einen Aktuator dazu veranlassen, in Bezug auf eine Kompressionsbeaufschlagung einer in einem Einspritzzylinder der Spritzgießmaschine oder Spritzpresse bereitgestellten Schmelze
   - eine Höhe jeder Kompressionsbeaufschlagung und/oder
   - auf Anzahl der durchgeführten Kompressionsbeaufschlagungen und/oder
   - Dauer jeder Kompressionsbeaufschlagung
so durchzuführen, dass sich eine Reduktion von Mikrofehlstellen ergibt.

Ein Verfahren zur Herstellung einer vorgegebenen Anzahl von Kunststoffteilen, insbesondere von optischen Elementen, durch Kunststoff-Spritzgießen oder Kunststoff-Spritzpressen, umfasst wenigstens die nachstehenden Schritte:
- Bereitstellen einer Schmelze im Einspritzzylinder einer Spritzgießmaschine oder Spritzpresse in einer Menge, welche auf die Anzahl der herzustellenden Kunststoffteile abgestellt ist
- Kompressionsbeaufschlagung der dosierten Schmelze im Einspritzzylinder in einer Höhe und/oder einer Anzahl und/oder mit einer Dauer so, dass sich in den hergestellten Kunststoffteilen eine Reduktion von Mikrofehlstellen ergibt
- Einspritzen der dosierten Schmelze in wenigstens ein Werkzeug zur Herstellung der vorgegebenen Anzahl von Kunststoffteilen

Unter einer Mikrofehlstelle (engl. "microvoid") wird eine Fehlstelle mit einer Größenordnung im Mikrometerbereich (µm-Bereich) verstanden. Typische Mikrofehlstellen weisen zum Beispiel eine Größe von ca. 10 - 20 µm auf.

Die Reduktion der Mikrofehlstellen kann sich beziehen auf:
- eine Reduktion des Volumenanteils der Mikrofehlstellen am Kunststoffteil und/oder
- eine Reduktion der Anzahl der Mikrofehlstellen im Kunststoffteil und/oder
- eine Größe der Mikrofehlstellen im Kunststoffteil

Die Überprüfung, ob sich in den hergestellten Kunststoffteilen eine Reduktion von Mikrofehlstellen, insbesondere von Mikrofehlstellen unterhalb eines vorgegebenen Grenzwerts ergibt, kann in an sich bekannter Weise mittels statistischer Untersuchungen von Probeteilen durchgeführt werden.

Selbstverständlich kann die numerische Definition eines Grenzwertes auch alle besseren (im Sinne von strengeren) Grenzwerte erfassen, d. h. zum Beispiel, ein Grenzwert in Form einer Reduktion der Mikrofehlstellen auf 50 % umfasst auch alle Anwendungsfälle, bei denen sich einer Reduktion um mehr als 50 %, beispielsweise auf 30 % ergibt.

Der vorgegebene Grenzwert kann an sich beliebig gewählt werden.

Es ist aber auch eine Wahl des Grenzwerts in Abhängigkeit von der Art und/oder Beschaffenheit und/oder Größe und/oder dem beabsichtigten Verwendungszweck der herzustellenden Kunststoffteile gewählt werden.

Alternativ ist eine Wahl des Grenzwerts in Bezug auf ein bisher durchgeführtes Herstellungsverfahren für einen bestimmten Kunststoffteil, z. B. die Angabe: "halb so viele Mikrofehlstellen wie bisher" möglich.

In Bezug auf die Einheit des Grenzwerts ist beispielsweise eine Angabe möglich in Bezug auf:
- Volumenanteil der Mikrofehlstellen am gesamten Volumen des Kunststoffteils (angegeben in vol%) und/oder
- Anzahl der Mikrofehlstellen pro Volumeneinheit des Kunststoffteils (angegeben in 1/mm³)
- mittlere Größe der Mikrofehlstellen im Kunststoffteil (angegeben in mm³ oder mm)

**Tabelle 1 mit Beispielen:**

| Kriterium: | Kunststoffteil 1: | Kunststoffteil 2: |
|---|---|---|
| Art | Linse | Zahnrad |
| Beschaffenheit | PMMA | PA |
| Größe | Durchmesser 3 mm | Durchmesser 35 mm |
| Verwendungszweck | Smartphone-Linse in Kombination mit einer vorgegebenen Auswerteelektronik | Einsatz im Getriebe eines Modellhubschraubers |
| Grenzwert | 0,1 vol% | 0,5 vol% |

Die Bestimmung der Mikrofehlstellen kann je nach Kunststoffteil nicht über den gesamten Kunststoffteil von Bedeutung sein, sondern z. B. in Bezug auf optische Elemente nur in optisch aktiven Bereichen oder in Bezug auf mechanisch belastete Kunststoffteile nur in Bereichen höchster mechanischer Belastung. Bei manchen Kunststoffteilen kann die Bestimmung der Mikrofehlstellen über den gesamten Kunststoffteil von Bedeutung sein.

Natürlich ist es ohnehin nichts stets erforderlich, den gesamten Kunststoffteil zu messen, sondern es kann die Untersuchung eines Ausschnittes mit anschließendem statistischen Hochrechnen genügen.

Bislang bestand der Dosierprozess unter Verwendung eines Plastifizierzylinders stets aus drei Schritten: Einer (optionalen) Kompressionsentlastung vor dem Dosieren, dem eigentlichen Plastifizierprozess (Aufbringen eines Staudrucks während des Dosierens) sowie einer (ebenfalls optionalen) Kompressionsentlastung nach dem Dosieren. Diese Schritte bieten oft nicht ausreichend Flexibilität, um in der Schmelze vorhandene Gase zu eliminieren.

Nach dem Henry-Gesetz besteht ein direkter Zusammenhang zwischen dem Druck, unter dem eine Schmelze steht und der Gasmenge, die in ihr gelöst werden kann. Gemäß der Erfindung ist vorgesehen, etwaige Gasvorkommen durch Druckbeaufschlagung vor dem Einspritzen in das Spritzgieß-Werkzeug oder Spritzpress-Werkzeug erneut zu lösen und Mikrofehlstellen damit zu vermeiden.

Vorteilhafte Ausführungsformen der Erfindung sind in den abhängigen Ansprüchen definiert. Soweit nicht explizit anders ausgeführt, beziehen sich die nachstehenden Angaben sowohl auf Ausführungsformen der Vorrichtung als auch des Verfahrens.

Kunststoffteile, deren Herstellung nach der Erfindung besonders vorteilhaft ist, sind neben optischen Elementen insbesondere mechanisch beanspruchte Bauteile. Vor allem bei zyklischen Belastungen gehen Risse oft von Mikrofehlstellen im Material aus. Eine Reduktion ebendieser Mikrofehlstellen führt zu einer verbesserten Dauerfestigkeit.

Beispiele für optische Elemente sind insbesondere Linsen (vor allem solche, welche für Smartphones und Tablets geeignet sind und dickwandige Linsen im Automotive-Bereich) und Lichtleiter.

Bevorzugte transparente Kunststoffe sind Polycarbonat (PC), Cycloolefin-Copolymere (COC), Liquid Silicone Rubber (LSR), Polystyrol (PS) und Polymethylmethacrylat (PMMA).

Bevorzugte nicht-transparente Kunststoffe sind Polyamid (PA), Polyoxymethylen (POM) und Polypropylen (PP).

Will man die Erfindung optimal zum Einsatz bringen, ist es vorteilhaft die Anzahl, Größe und Dauer der Kompressionsbeaufschlagungen in Abhängigkeit des Kunststoffteiles zu wählen. Es hat sich aber gezeigt, dass eine Wahl im Bereich der nachstehenden Angaben ausreichend ist, um eine Reduktion von Mikrofehlstellen von mindestens 50 % erreichen zu können:
- eine Anzahl von einer Kompressionsbeaufschlagung, von zwei oder drei Kompressionsbeaufschlagungen derselben Schmelze in ein- und demselben Spritzzyklus
- eine Höhe von 100 %, bevorzugt 150 %, besonders bevorzugt 200 %, gemessen an der Höhe des Staudrucks während des Dosierens (die Höhe kann bei verschiedenen Kompressionsbeaufschlagungen verschieden gewählt werden)
- eine gesamte Dauer aller Kompressionsbeaufschlagungen zusammen in einem Bereich von ca. 2,5 bis 3,5 Sekunden, bevorzugt 2,9 bis 3,1 Sekunden, bevorzugt eine gesamte Dauer von 3 Sekunden

Es besteht natürlich eine gewisse Kompensationsmöglichkeit insofern, als man z. B. eine geringere Dauer einer Kompressionsbeaufschlagung durch eine Erhöhung der Anzahl und/oder der Höhe kompensieren kann. Dies gilt in Bezug auf jede der drei Größen.

Bevorzugt ist vorgesehen, dass der vorgegebene Grenzwert ein bestimmter Prozentsatz, vorzugsweise 50 % oder 30 %, des Volumenanteils der ursprünglich vorhandenen Mikrofehlstellen ist (d. h. dass der Volumenanteil der Mikrofehlstellen unter 50 % des Ausgangswertes liegt, wobei dieser Ausgangswert jenem Wert entspricht, der sich ohne der wenigstens einen Kompressionsbeaufschlagung im Kunststoffbauteil ergibt), (Beispiel für Grenzwert = 50 %: ursprünglich 0,6 vol% -> Grenzwert = 0,3 vol%; Beispiel für Grenzwert = 30 %: ursprünglich 0,6 vol%, Grenzwert = 0,18 vol%) und die wenigstens eine Regeleinrichtung dazu konfiguriert ist, über den wenigstens einen Signalausgang Befehle an den wenigstens einen Aktuator zu übermitteln, welche diesen dazu veranlassen, die wenigstens eine Kompressionsbeaufschlagung so durchzuführen, dass Mikrofehlstellen unterhalb dieses Wertes, bevorzugt unterhalb von 0,3 vol%, besonders bevorzugt unterhalb von 0,18 vol%, vorliegen.

Bevorzugt ist vorgesehen, dass die Vorrichtung wenigstens einen Signaleingang aufweist (vor allem falls durch die Vorrichtung nicht nur ein Steuern, sondern ein Regeln erfolgen soll), über welchen Signale wenigstens eines Sensors einer Spritzgießmaschine oder Spritzpresse an die wenigstens eine Recheneinheit übermittelbar sind.

Bevorzugt ist vorgesehen, dass die Vorrichtung wenigstens eine Bedieneinheit aufweist, die dazu konfiguriert ist, einem Bediener mittels eines Bedienprogrammes von der wenigstens einen Recheneinheit bereitgestellte Informationen darzustellen und Eingaben des Bedieners an die wenigstens eine Recheneinheit zu übermitteln wobei vorzugsweise vorgesehen ist, dass das Bedienprogramm dazu konfiguriert ist, Eingaben eines Bedieners in Bezug auf
- eine Größe jeder Kompressionsbeaufschlagung und/oder
- auf Anzahl der durchgeführten Kompressionsbeaufschlagungen und/oder
- Dauer jeder Kompressionsbeaufschlagung
zu akzeptieren und an die wenigstens eine Recheneinheit zu übermitteln, welche in Abhängigkeit dieser Eingaben Befehle an wenigstens einen Aktuator einer Spritzgießmaschine oder Spritzpresse übermittelt.

Dieses Ausführungsbeispiel gibt einem Bediener eine Vielzahl neuer Bausteine zur Erweiterung des Plastifizierprozesses an die Hand. Das Computerprogramm bietet zusätzliche Bausteine, mit denen der Maschinenablauf individualisiert werden kann. Kernelement ist hierbei eine frei konfigurierbare Plastifiziersequenz, die als Zusatzsequenz in den Ablauf programmiert werden kann. Darin können Ablaufschritte wie Dosieren, Schneckenrückdrehen zum Schließen einer zwangsschließenden Smartshut-Sperre oder Kompressionsentlastungen programmiert werden. Auch wenigstens zwei Optionen zur Staudruckaufbringung, welche die gemäß der Erfindung vorgesehene Kompressionsbeaufschlagung der Schmelze nach dem Dosieren erlauben, sind möglich. Diese Druckbeaufschlagung ist wiederum bezüglich Höhe, Dauer und Zeitpunkt beliebig einstellbar.

Bevorzugt ist vorgesehen, dass es sich beim Einspritzzylinder der Spritzgießmaschine oder Spritzpresse um einen Plastifizierzylinder handelt, in welchem als Aktuator in bekannter Weise eine Plastifizierschnecke sowohl translatorisch verschiebbar als auch drehbar gelagert ist, sodass sowohl Plastifizieren als auch Dosieren im Einspritzzylinder stattfinden können. Alternativ wäre es aber auch denkbar, die Plastifizierung und/oder das Aufdosieren in einer gesonderten Vorrichtung, beispielsweise in einem Extruder durchzuführen, und die vorbereitete Schmelze, gegebenenfalls nach Zwischenspeicherung in einem Zwischenspeicher in den Einspritzzylinder einzubringen, welcher in diesem Fall bevorzugt als Kolben-Zylinder-Einheit mit einem translatorisch bewegbaren und rotatorisch feststehenden Einspritzkolben als Aktuator ausgebildet ist.

Neben der Staudruckerzeugung über eine Verschiebung der Plastifizierschnecke ("Staudruck über Schneckenposition") kann auch über eine Drehung der Plastifizierschnecke ("Staudruck über Schneckendrehen") Druck erzeugt werden. Während bei der Staudruckvariante über Schneckenposition ein axialer Hub ausgeführt wird, steht die Schnecke bei der Variante über Schneckendrehen bevorzugt axial still.

Bevorzugtes Nachweisverfahren für Mikrofehlstellen in wenigstens bereichsweise transparenten Kunststoffen:

Bei wenigstens bereichsweise transparenten Kunststoffteilen, insbesondere bei optischen Linsen, ist es naheliegend, eine Qualitätskontrolle mittels Lichtmikroskopie durchzuführen. Viele Defekte, die im Spritzgießprozess auftreten können, sind damit problemlos erkennbar, wie zum Beispiel Einfallstellen, Oberflächendefekte und Black Spots. Der Fokus liegt hierbei auf dem eigentlichen Linsenkörper (Durchmesser ca. 3 mm) oder je nach Anwendung auch anderen transparenten und optisch wirksamen Bereichen, da Defekte in den technischen Randbereichen (Montagefunktion) weniger relevant sind.

Aufgrund der Marktentwicklungen hin zu immer höherauflösenden Sensoren mit höherer Lichtempfindlichkeit und Kameramodulen, die für einen sehr großen Digitalzoombereich genutzt werden, reduziert sich die Größe der akzeptablen Fehlstellen in Bereiche, die für das menschliche Auge selbst unten dem Mikroskop nicht mehr erkennbar sind. Um diese Fehlstellen sichtbar zu machen, sind spezielle Messmethoden notwendig, wobei die Optische Kohärenztomographie (engl. Optical Coherence Tomography, OCT) dank ihrer Performance hinsichtlich Auflösung und Messdauer eine bevorzugte Variante ist. Ein alternatives Messverfahren ist zum Beispiel Röntgen-CT.

Die OCT wird zur Erstellung hochauflösender von 2D- oder 3D-Bilder in organischen und anorganischen Materialien verwendet. Im Prinzip kann die Methode als optisches Äquivalent zu Ultraschallmessungen angesehen werden. Durch Nutzung von Weißlichtinterferometrie nutzt sie Interferenzen aus Referenzstrahl und rückgestreutem Licht aus der Probe zur Erstellung eines Tiefenprofils. Eine Lichtquelle strahlt dabei durch einen Strahlenteiler, wobei ein Referenzstrahl und ein Strahl zur Probe gebildet wird. Die Detektion von Interferenzen geschieht nach Spektralzerlegung mittels eines Gitters am Detektor. Je nach verwendeter Lichtquelle sind Tiefenauflösungen von 1 µm und laterale Auflösungen von 0,5 µm möglich.

Für eine Zählung von Mikrofehlstellen wird ein Volumenscan des optischen Elements in Schnitte zerlegt und für jeden Schnitt wird die Anzahl an Mikrofehlstellen bestimmt. OCT-Analysen bringen aber die Herausforderung mit sich, dass sogenannte Speckles auftreten, die durch unvermeidbare innere Streuungen der Strahlung in der Probe entstehen. Sie äußern sich auf den aufgenommenen Bildern als weiße Punkte, die kaum von den gesuchten Mikrofehlstellen zu unterscheiden sind. Es ist aber durch eine Auswerteroutine möglich, zuverlässig zwischen Speckles und tatsächlichen Mikrofehlstellen zu unterscheiden, sodass eine Messung der tatsächlichen Mikrofehlstellen erfolgen kann. Diese Auswerteroutine macht sich zunutze, dass sich Speckles und Mikrofehlstellen in der Bildgebung in Bezug auf den Übergang zur Umgebung voneinander unterscheiden: Während Speckles scharf abgegrenzt sind, erscheinen Mikrofehlstellen mit einem graduellen Verlauf. Eine Differenzierung ist leicht möglich, beispielsweise durch Einsatz einer Kantendetektion.

Bevorzugtes Nachweisverfahren für Mikrofehlstellen in nicht transparenten Kunststoffen:

Es können genau dieselben Maßnahmen und Algorithmen verwendet werden wie in Bezug auf transparente Kunststoffe, allerdings auf Basis eines Röntgen-CT-Verfahrens (Röntgen-Computertomografie-Verfahrens).

Ausführungsbeispiele der Erfindung werden anhand der Figuren diskutiert.
Figur 1 zeigt beispielhaft eine Spritzgießmaschine gemäß einem Ausführungsbeispiel der Erfindung.
Figur 2A und 2B zeigen jeweils schematisch einen Verlauf der Druckbeaufschlagung einer Schmelze in Ausführungsbeispielen der Erfindung.
Figur 3 zeigt schematisch einen Verlauf der Druckbeaufschlagung einer Schmelze in einem weiteren Ausführungsbeispiel der Erfindung.
Figur 4A und 4B zeigen im Vergleich eine Reduktion von Mikrofehlstellen in einem Ausführungsbeispiel der Erfindung.
Figur 5 zeigt eine Möglichkeit der Differenzierung zwischen Speckles und Mikrofehlstellen.
Figur 6 zeigt schematisch Auswahlmöglichkeiten durch ein Computerprogramm gemäß einem Ausführungsbeispiel der Erfindung.

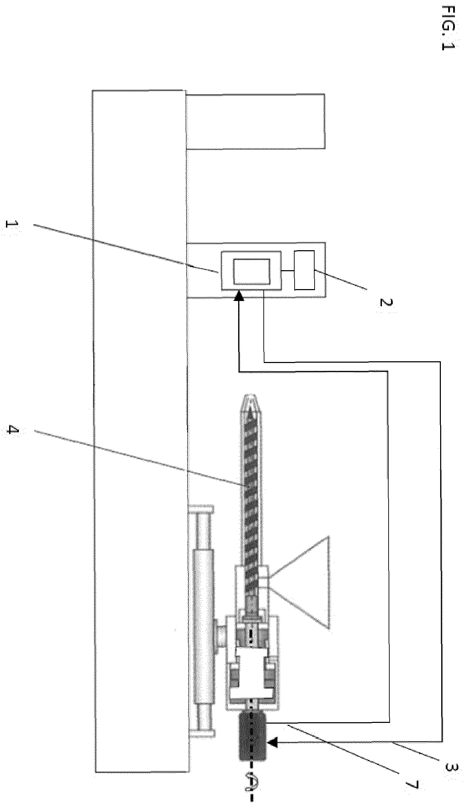

In Figur 1 ist eine an sich bekannte Spritzgießmaschine dargestellt, welche sich vom Stand der Technik nur dadurch unterscheidet, dass sie eine Vorrichtung 1 aufweist, welche beispielsweise in Form einer Maschinensteuerung der Spritzgießmaschine ausgebildet sein kann. Die Vorrichtung 1 weist eine Recheneinheit 2, einen Signalausgang 3 und einen Signaleingang 7 auf. Signalausgang 3 und Signaleingang 7 sind wie nur schematisch gezeigt mit dem Aktuator 4 verbunden (konkret natürlich mit Motoren, welche den Aktuator 4 antreiben) und dienen dazu, Position und/oder Drehzahl des Aktuators 4 zu bestimmen. Natürlich können weitere Signalausgänge 3 zu weiteren nicht dargestellten Aktuatoren und weitere Signaleingänge 7 zu nicht dargestellten Sensoren (z. B. zur Druckmessung) vorgesehen sein.

Im gezeigten Ausführungsbeispiel ist als Aktuator 4 eine in einem Einspritzzylinder angeordnete drehbare und verschiebbare Plastifizierschnecke vorgesehen.

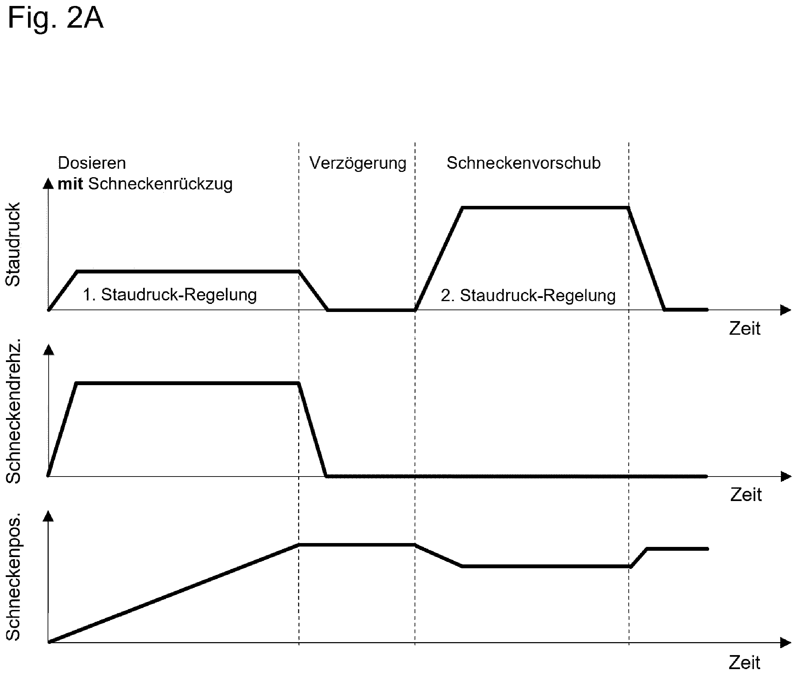

Figur 2A zeigt schematisch einen Verlauf der Druckbeaufschlagung einer Schmelze (als erste Staudruckregelung bezeichnet) in einem Ausführungsbeispiel der Erfindung, wobei die Kompressionsbeaufschlagung über die Position eines Aktuators 4 erfolgt. Gezeigt sind auch die Schneckendrehzahl und die Schneckenposition des Aktuators 4. Nach einem Dosiervorgang, bei welcher ein Staudruck mit Höhe von 100 % vorliegt erfolgt eine optionale Verzögerungsphase. Anschließend erfolgt eine erste und einzige Kompressionsbeaufschlagung (als zweite Staudruck-Regelung bezeichnet) zur Reduktion von Mikrofehlstellen.

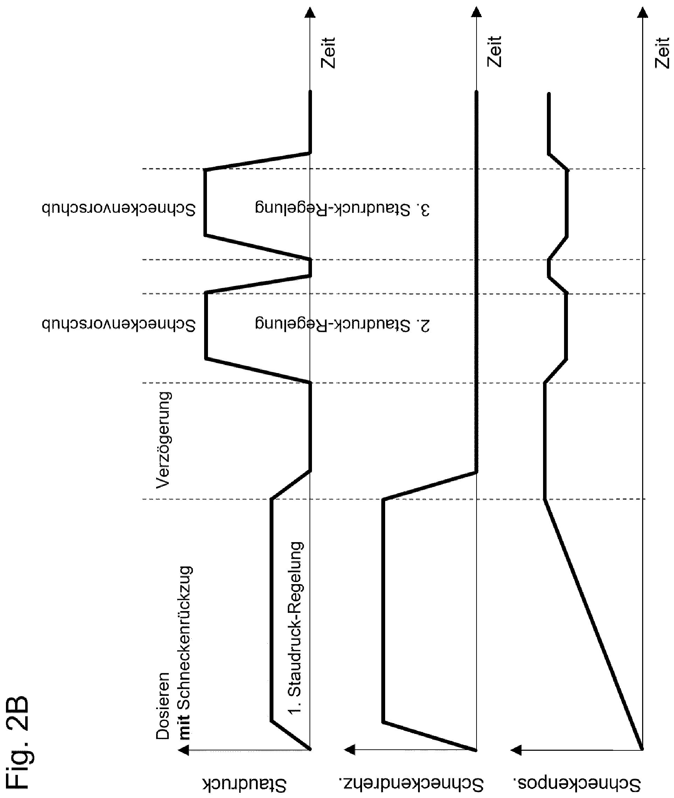

In Figur 2B sind beispielhaft anstelle einer einzigen Kompressionsbeaufschlagung zur Reduktion von Mikrofehlstellen zwei Kompressionsbeaufschlagungen (als zweite und dritte Staudruckregelung bezeichnet) vorgesehen.

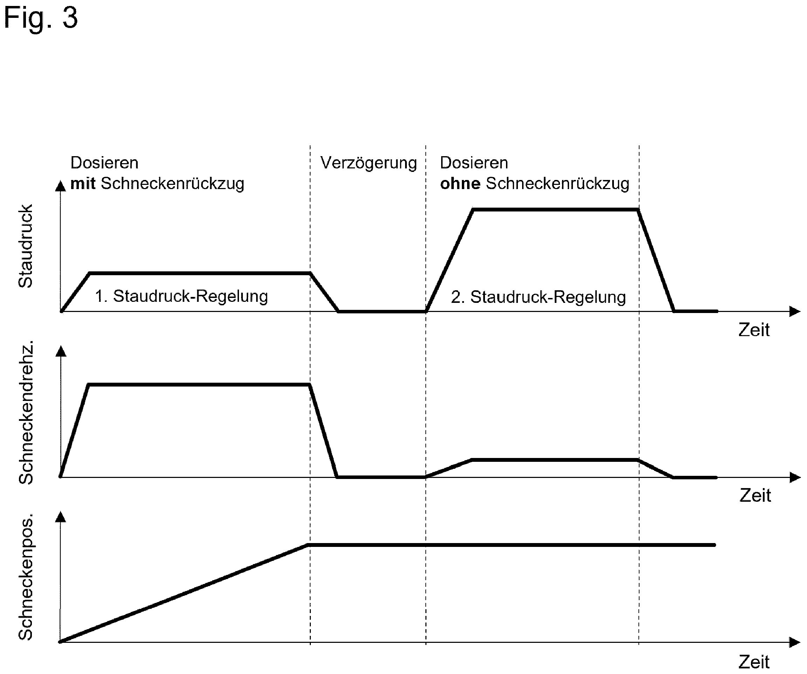

Figur 3 zeigt schematisch einen Verlauf der Druckbeaufschlagung einer Schmelze in einem Ausführungsbeispiel der Erfindung, wobei die Kompressionsbeaufschlagung über die Drehung eines Aktuators 4 in Form einer Plastifizierschnecke erfolgt. Figur 3 entspricht der Figur 2A, allerdings wird hier die erste und einzige Kompressionsbeaufschlagung durch eine Drehung der Plastifizierschnecke (ohne axiale Bewegung derselben) erzeugt. Natürlich könnte auch so wie in Figur 2B gezeigt vorgegangen werden.

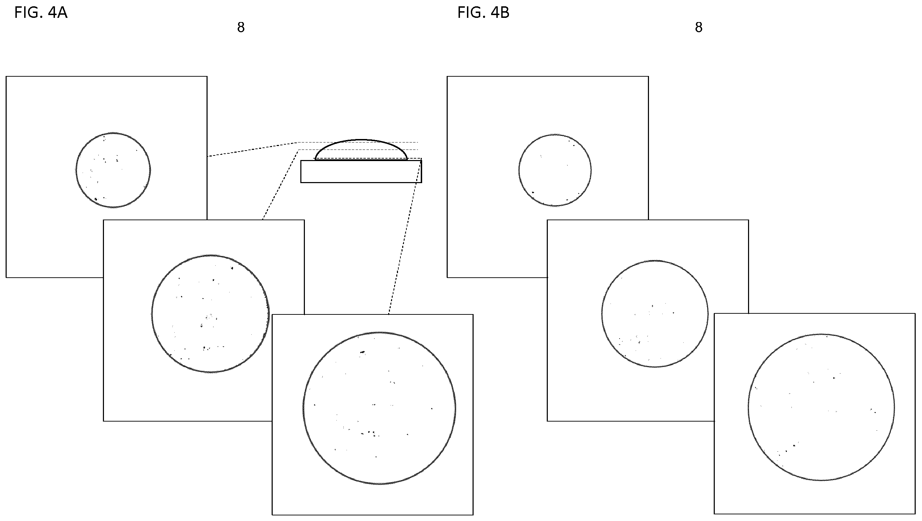

In Figur 4A ist ein Ausschnitt einer Linse dargestellt, wobei eine Vielzahl von Mikrofehlstellen 5 (Speckles 6 wurden bereits entfernt) erkennbar sind. Durch Berücksichtigung verschiedener Schnittebenen 8 kann ein Volumenanteil der Mikrofehlstellen 5 automatisch bestimmt werden. Im Vergleich dazu (nämlich zur Figur 4A) ist in der Figur 4B, welche das Ergebnis eines erfindungsgemäßen Verfahrens zeigt, eine deutlich reduzierte Anzahl an Mikrofehlstellen 5 erkennbar.

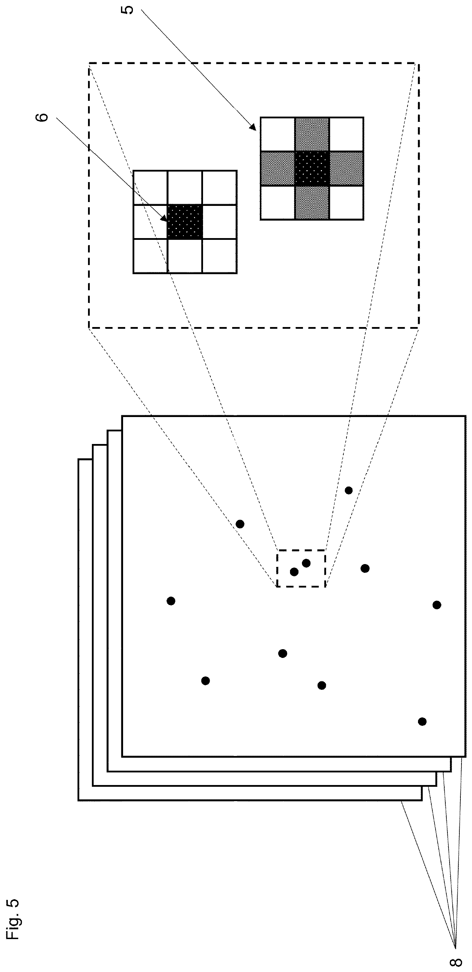

Figur 5 zeigt, dass bei einem Speckle 6 eine scharfe Abgrenzung zur Umgebung vorliegt, während bei einer Mikrofehlstelle 5 ein Verlauf vorliegt (das Pixelraster ist jeweils nur in der Umgebung des Speckles 6 und der Mikrofehlstelle 5 dargestellt).

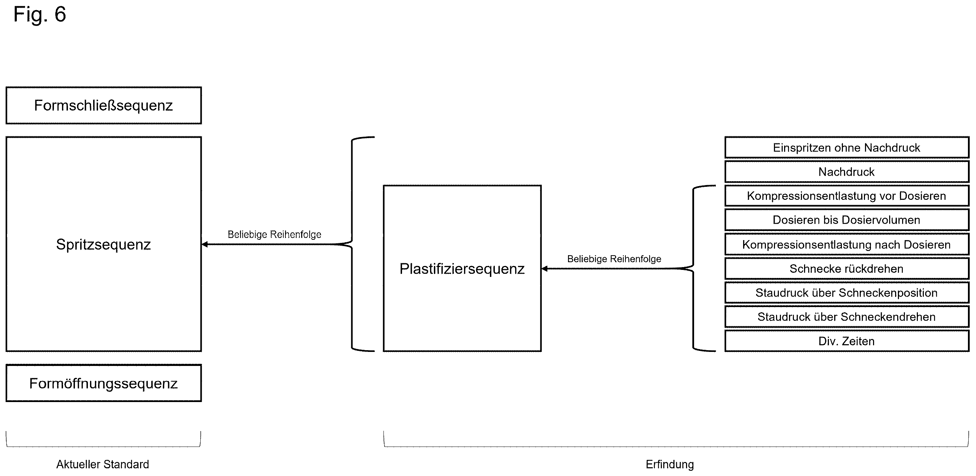

Figur 6 zeigt eine durch ein Ausführungsbeispiel der Erfindung ermöglichte Erweiterung der Gestaltung eines Verfahrens zur Herstellung von Kunststoffteilen, bei welcher nun auch eine individuelle Gestaltung des Plastifizierprozesses möglich ist.

### Bezugszeichenliste:

- 1: Vorrichtung zur Steuerung oder Regelung der Herstellung einer vorgegebenen Anzahl von Kunststoffteilen
- 2: Recheneinheit
- 3: Signalausgang
- 4: Aktuator
- 5: Mikrofehlstelle
- 6: Speckle
- 7: Signaleingang
- 8: Schnittebene

## Patentansprüche

1. Vorrichtung (1) zur Steuerung oder Regelung der Herstellung einer vorgegebenen Anzahl von Kunststoffteilen, insbesondere von optischen Elementen, pro Spritzyklus einer Spritzgießmaschine oder Spritzpresse, mit:
- wenigstens einer Recheneinheit (2)
- wenigstens einem Signalausgang (3), über welchen durch die wenigstens eine Recheneinheit (2) Befehle an wenigstens einen Aktuator (4) einer Spritzgießmaschine oder Spritzpresse übermittelbar sind, welche den wenigstens einen Aktuator (4) dazu veranlassen, wenigstens eine Kompressionsbeaufschlagung einer in einem Einspritzzylinder der Spritzgießmaschine oder Spritzpresse bereitgestellten Schmelze durchzuführen
wobei die wenigstens eine Recheneinheit (2) dazu konfiguriert ist, über den wenigstens einen Signalausgang (3) Befehle an wenigstens einen Aktuator (4) einer Spritzgießmaschine oder Spritzpresse zu übermitteln, welche den wenigstens einen Aktuator (4) dazu veranlassen, die wenigstens eine Kompressionsbeaufschlagung vor einem Einspritzen in Bezug auf
- eine Höhe jeder Kompressionsbeaufschlagung und/oder
- Anzahl an Kompressionsbeaufschlagungen und/oder
- eine Dauer jeder Kompressionsbeaufschlagung
so durchzuführen, dass sich eine Reduktion von Mikrofehlstellen (5) ergibt.

2. Vorrichtung nach dem vorangehenden Anspruch, wobei die wenigstens eine Kompressionsbeaufschlagung so gewählt ist, dass in den hergestellten Kunststoffteilen Mikrofehlstellen unterhalb eines vorgegebenen Grenzwerts vorliegen.

3. Vorrichtung nach einem der vorangehenden Ansprüche, wobei die wenigstens eine Recheneinheit dazu konfiguriert ist, über den wenigstens einen Signalausgang Befehle an wenigstens einen Aktuator einer Spritzgießmaschine oder Spritzpresse zu übermitteln, welche den wenigstens einen Aktuator dazu veranlassen, mehr als eine Kompressionsbeaufschlagung derselben Schmelze in einem Spritzzyklus vorzunehmen.

4. Vorrichtung nach wenigstens einem der vorangehenden Ansprüche, wobei die wenigstens eine Recheneinheit dazu konfiguriert ist, über den wenigstens einen Signalausgang Befehle an wenigstens einen Aktuator einer Spritzgießmaschine oder Spritzpresse zu übermitteln, welche den wenigstens einen Aktuator dazu veranlassen:
- eine Anzahl von einer Kompressionsbeaufschlagung, von zwei oder drei Kompressionsbeaufschlagungen derselben Schmelze in ein- und demselben Spritzzyklus und/oder
- wenigstens eine Kompressionsbeaufschlagung mit einer Höhe von 100 %, bevorzugt 150 %, besonders bevorzugt 200 %, gemessen an der Höhe des Staudrucks während des Dosierens und/oder
- wenigstens eine Kompressionsbeaufschlagung mit einer gesamten Dauer in einem Bereich von ca. 2,5 bis 3,5 Sekunden, bevorzugt 2,9 bis 3,1 Sekunden, bevorzugt mit einer gesamten Dauer von 3 Sekunden
durchzuführen.

5. Vorrichtung nach wenigstens einem der vorangehenden Ansprüche, wobei die wenigstens eine Regeleinrichtung dazu konfiguriert ist, über den wenigstens einen Signalausgang Befehle an den wenigstens einen Aktuator zu übermitteln, welche diesen dazu veranlassen, die wenigstens eine Kompressionsbeaufschlagung so durchzuführen, dass der Volumenanteil der Mikrofehlstellen unter einem bestimmten Prozentsatz, bevorzugt 50 % oder 30 %, des Ausgangswertes liegt, wobei dieser Ausgangswert jenem Wert entspricht, der sich ohne der wenigstens einen Kompressionsbeaufschlagung im Kunststoffbauteil ergibt, wobei bevorzugt ein Volumenanteil der Mikrofehlstellen unterhalb von 0,3 vol%, bevorzugt unterhalb von 0,18 vol%, liegt.

6. Vorrichtung nach wenigstens einem der vorangehenden Ansprüche mit wenigstens einer Bedieneinheit, die dazu konfiguriert ist, einem Bediener mittels eines Bedienprogrammes von der wenigstens einen Recheneinheit bereitgestellte Informationen darzustellen und Eingaben des Bedieners an die wenigstens eine Recheneinheit zu übermitteln, wobei vorzugsweise vorgesehen ist, dass das Bedienprogramm dazu konfiguriert ist, Eingaben eines Bedieners in Bezug auf
- eine Höhe jeder Kompressionsbeaufschlagung und/oder
- eine Anzahl an Kompressionsbeaufschlagungen und/oder
- eine Dauer jeder Kompressionsbeaufschlagung
zu akzeptieren und an die wenigstens eine Recheneinheit zu übermitteln, welche in Abhängigkeit dieser Eingaben Befehle an wenigstens einen Aktuator einer Spritzgießmaschine oder Spritzpresse übermittelt.

7. Vorrichtung nach wenigstens einem der vorangehenden Ansprüche mit wenigstens einem Signaleingang, über welchen Signale wenigstens eines Sensors einer Spritzgießmaschine oder Spritzpresse an die wenigstens eine Recheneinheit übermittelbar sind.

8. Spritzgießmaschine oder Spritzpresse, welche mit einer Vorrichtung nach wenigstens einem der vorangehenden Ansprüche in operativer Verbindung steht oder eine solche Vorrichtung aufweist.

9. Spritzgießmaschine oder Spritzpresse nach dem vorangehenden Anspruch, wobei der Einspritzzylinder durch einen Plastifizierzylinder gebildet ist, in welchem ein Aktuator in Form wenigstens einer verschiebbar und drehbar gelagerten Plastifizierschnecke angeordnet ist, wobei die wenigstens eine Regeleinrichtung dazu konfiguriert ist, über den wenigstens einen Signalausgang Befehle an die wenigstens eine Plastifizierschnecke zu übermitteln, welche diese dazu veranlassen, die wenigstens eine Kompressionsbeaufschlagung vor einem Einspritzen über
- ein Verschieben der wenigstens einen Plastifizierschnecke und/oder
- ein Drehen der wenigstens einen Plastifizierschnecke durchzuführen.

10. Verfahren zur Herstellung einer vorgegebenen Anzahl von Kunststoffteilen, insbesondere von optischen Elementen, durch Kunststoff-Spritzgießen oder Kunststoff-Spritzpressen mittels einer Spritzgießmaschine oder Spritzpresse, umfassend wenigstens die nachstehenden Schritte:
- Bereitstellen einer Schmelze in einem Einspritzzylinder der Spritzgießmaschine oder Spritzpresse in einer Menge, welche auf die Anzahl der herzustellenden Kunststoffteile abgestellt ist
- Durchführen wenigstens einer Kompressionsbeaufschlagung der dosierten Schmelze im Einspritzzylinder
- Einspritzen der dosierten Schmelze in wenigstens ein Werkzeug zur Herstellung der vorgegebenen Anzahl von Kunststoffteilen
wobei der Schritt der wenigstens einen Kompressionsbeaufschlagung der Schmelze im Einspritzzylinder vor dem Einspritzen in Bezug
- eine Höhe jeder Kompressionsbeaufschlagung und/oder
- auf Anzahl der durchgeführten Kompressionsbeaufschlagungen und/oder
- Dauer jeder Kompressionsbeaufschlagung
so gewählt ist, dass sich eine Reduktion von Mikrofehlstellen (5) ergibt.

11. Verfahren nach dem vorangehenden Anspruch, wobei der Schritt der wenigstens einen Kompressionsbeaufschlagung der Schmelze im Einspritzzylinder so durchgeführt wird, dass in den hergestellten Kunststoffteilen Mikrofehlstellen unterhalb eines vorgegebenen Grenzwerts vorliegen.

12. Verfahren nach einem der beiden vorangehenden Ansprüche, wobei verwendet wird:
- eine Anzahl von einer Kompressionsbeaufschlagung, von zwei oder drei Kompressionsbeaufschlagungen derselben Schmelze in ein- und demselben Spritzzyklus und/oder
- eine Höhe von 100 %, bevorzugt 150 %, besonders bevorzugt 200 %, gemessen an der Höhe des Staudrucks während des Dosierens und/oder
- eine gesamte Dauer in einem Bereich von ca. 2,5 bis 3,5 Sekunden, bevorzugt 2,9 bis 3,1 Sekunden, bevorzugt eine gesamte Dauer von 3 Sekunden

13. Verfahren nach einem der beiden vorangehenden Ansprüche, wobei sich der vorgegebene Grenzwert auf einen Volumenanteil der Mikrofehlstellen bezieht und der Volumenanteil der Mikrofehlstellen unter einem bestimmten Prozentsatz, bevorzugt 50 % oder 30 %, des Ausgangswertes liegt, wobei dieser Ausgangswert jenem Wert entspricht, der sich ohne der wenigstens einen Kompressionsbeaufschlagung im Kunststoffbauteil ergibt, und bevorzugt gleich 0,3 vol%, bevorzugt 0,18 vol%, ist.

14. Verfahren nach wenigstens einem der vorangehenden Ansprüche, wobei die wenigstens eine Kompressionsbeaufschlagung über
- ein Verschieben und/oder
- ein Drehen
wenigstens einer Plastifizierschnecke der Spritzgießmaschine oder Spritzpresse durchgeführt wird.

15. Computerprogramm, umfassend Befehle, die bei der Ausführung des Programms einen Computer dazu veranlassen, mittels der Vorrichtung nach wenigstens einem der Ansprüche 1 bis 7 das Verfahren nach wenigstens einem der Ansprüche 10 bis 14 auszuführen.

16. Datenträgersignal, welches das Computerprogramm nach dem vorangehenden Anspruch überträgt.

## Claims

1. Device (1) for open-loop or closed-loop controlling the production of a predefined number of plastic parts, in particular of optical elements, in each injection cycle of an injection moulding machine or transfer mould, having:
- at least one processing unit (2)
- at least one signal output (3), via which commands can be transmitted, by the at least one processing unit (2), to at least one actuator (4) of an injection moulding machine or transfer mould, which commands prompt the at least one actuator (4) to carry out at least one application of compression to a melt provided in an injection cylinder of the injection moulding machine or transfer mould,
wherein the at least one processing unit (2) is configured to transmit commands to at least one actuator (4) of an injection moulding machine or transfer mould, via the at least one signal output (3), which commands prompt the at least one actuator (4) to carry out the at least one application of compression before an injection in relation to
- a level of each application of compression and/or
- a number of applications of compression and/or
- a duration of each application of compression,
such that there is a reduction in microdefects (5).

2. Device according to the preceding claim, wherein the at least one application of compression is chosen such that microdefects are present in the plastic parts produced below a predefined threshold value.

3. Device according to one of the preceding claims, wherein the at least one processing unit is configured to transmit commands to at least one actuator of an injection moulding machine or transfer mould, via the at least one signal output, wherein the commands prompt the at least one actuator to perform more than one application of compression to the same melt in one injection cycle.

4. Device according to at least one of the preceding claims, wherein the at least one processing unit is configured to transmit commands to at least one actuator of an injection moulding machine or transfer mould, via the at least one signal output, which commands prompt the at least one actuator to carry out:
- a number of one application of compression, of two or three applications of compression to the same melt in one and the same injection cycle and/or
- at least one application of compression with a level of 100%, preferably 150%, particularly preferably 200%, measured against the level of the backpressure during the metering and/or
- at least one application of compression with a total duration in a range of from approx. 2.5 to 3.5 seconds, preferably 2.9 to 3.1 seconds, preferably with a total duration of 3 seconds.

5. Device according to at least one of the preceding claims, wherein the at least one regulating device is configured to transmit commands to the at least one actuator, via the at least one signal output, which commands prompt the at least one actuator to carry out the at least one application of compression such that the volume share of the microdefects is below a particular percentage, preferably 50% or 30%, of the initial value, wherein this initial value corresponds to the value which is present in the plastic component part without the at least one application of compression, wherein a volume share of the microdefects is preferably below 0.3 vol.-%, preferably below 0.18 vol.-%.

6. Device according to at least one of the preceding claims having at least one operating unit, which is configured to display information provided by the at least one processing unit to an operator by means of an operating program and to transmit inputs by the operator to the at least one processing unit, wherein it is preferably provided that the operating program is configured to accept inputs by an operator in relation to
- a level of each application of compression and/or
- a number of applications of compression and/or
- a duration of each application of compression
and to transmit them to the at least one processing unit, which transmits commands to at least one actuator of an injection moulding machine or transfer mould in dependence on these inputs.

7. Device according to at least one of the preceding claims having at least one signal input, via which signals of at least one sensor of an injection moulding machine or transfer mould can be transmitted to the at least one processing unit.

8. Injection moulding machine or transfer mould which is in operative connection with a device according to at least one of the preceding claims or has such a device.

9. Injection moulding machine or transfer mould according to the preceding claim, wherein the injection cylinder is formed by a plasticizing cylinder, in which an actuator in the form of at least one displaceably and rotatably mounted plasticizing screw is arranged, wherein the at least one regulating device is configured to transmit commands, via the at least one signal output, to the at least one plasticizing screw wherein the commands prompt the at least one plasticizing screw to carry out the at least one application of compression before an injection via
- a displacement of the at least one plasticizing screw and/or
- a rotation of the at least one plasticizing screw.

10. Process for producing a predefined number of plastic parts, in particular of optical elements, by plastic injection moulding or plastic transfer moulding by means of an injection moulding machine or transfer mould, comprising at least the following steps:
- providing a melt in an injection cylinder of the injection moulding machine or transfer mould in an amount which is geared to the number of plastic parts to be produced
- carrying out at least one application of compression to the metered melt in the injection cylinder
- injecting the metered melt into at least one mould to produce the predefined number of plastic parts
wherein the step of the at least one application of compression to the melt in the injection cylinder before the injection is chosen in relation to
- a level of each application of compression and/or
- a number of applications of compression carried out and/or
- a duration of each application of compression
such that there is a reduction in microdefects (5).

11. Process according to the preceding claim, wherein the step of the at least one application of compression to the melt in the injection cylinder is carried out such that microdefects are present in the plastic parts produced below a predefined threshold value.

12. Process according to one of the two preceding claims, wherein the following are used:
- a number of one application of compression, of two or three applications of compression to the same melt in one and the same injection cycle and/or
- a level of 100%, preferably 150%, particularly preferably 200%, measured against the level of the backpressure during the metering and/or
- a total duration in a range of from approx. 2.5 to 3.5 seconds, preferably 2.9 to 3.1 seconds, preferably a total duration of 3 seconds.

13. Process according to one of the two preceding claims, wherein the predefined threshold value relates to a volume share of the microdefects and the volume share of the microdefects is below a particular percentage, preferably 50% or 30%, of the initial value, wherein this initial value corresponds to a volume share of microdefects which is present in the plastic component part without the at least one application of compression, and is preferably equal to 0.3 vol.-%, preferably 0.18 vol.-%.

14. Process according to at least one of the preceding claims, wherein the at least one application of compression is carried out via
- a displacement and/or
- a rotation
of at least one plasticizing screw of the injection moulding machine or transfer mould.

15. Computer program comprising commands, which, when the program is executed, prompt a computer to perform the process according to at least one of claims 10 to 14 by means of the device according to at least one of claims 1 to 7.

16. Data carrier signal which carries the computer program according to the preceding claim.

## Revendications

1. Dispositif (1) de commande ou régulation de la fabrication d'un nombre prédéfini de pièces plastiques, notamment d'éléments optiques, par cycle d'injection d'une machine de moulage par injection ou presse à injection, avec :
- au moins une unité de calcul (2)
- au moins une sortie de signal (3), par l'intermédiaire de laquelle des commandes peuvent être transmises par l'au moins une unité de calcul (2) à au moins un actionneur (4) d'une machine de moulage par injection ou presse à injection, lesquelles amènent l'au moins un actionneur (4) à réaliser au moins une sollicitation par compression d'une masse fondue fournie dans un cylindre d'injection de la machine de moulage par injection ou presse à injection
dans lequel l'au moins une unité de calcul (2) est configurée pour transmettre par l'intermédiaire de l'au moins une sortie de signal (3) des commandes à l'au moins un actionneur (4) d'une machine de moulage par injection ou presse à injection, lesquelles amènent l'au moins un actionneur (4) à réaliser l'au moins une sollicitation par compression avant une injection concernant
- une ampleur de chaque sollicitation par compression et/ou
- le nombre de sollicitations par compression et/ou
- une durée de chaque sollicitation par compression
de sorte qu'une réduction des micro-défauts (5) est obtenue.

2. Dispositif selon la revendication précédente, dans lequel l'au moins une sollicitation par compression est choisie de sorte que des micro-défauts en dessous d'une valeur limite prédéfinie soient présents dans les pièces plastiques fabriquées.

3. Dispositif selon l'une quelconque des revendications précédentes, dans lequel l'au moins une unité de calcul est configurée pour transmettre par l'intermédiaire de l'au moins une sortie de signal des commandes à au moins un actionneur d'une machine de moulage par injection ou presse à injection, lesquelles amènent l'au moins un actionneur à effectuer plus d'une sollicitation par compression de la même masse fondue dans un cycle d'injection.

4. Dispositif selon au moins l'une des revendications précédentes, dans lequel l'au moins une unité de calcul est configurée pour transmettre par l'intermédiaire de l'au moins une sortie de signal des commandes à au moins un actionneur d'une machine de moulage par injection ou presse à injection, lesquelles amènent l'au moins un actionneur à :
- réaliser un nombre d'une sollicitation par compression, de deux ou trois sollicitations par compression de la même masse fondue dans un et même cycle d'injection et/ou
- au moins une sollicitation par compression avec une ampleur de 100 %, de préférence de 150 %, de manière particulièrement préférée de 200 %, mesurée à l'ampleur de la pression dynamique pendant le dosage et/ou
- au moins une sollicitation par compression avec une durée totale dans une plage d'environ 2,5 à 3,5 secondes, de préférence de 2,9 à 3,1 secondes, de préférence avec une durée totale de 3 secondes.

5. Dispositif selon au moins l'une des revendications précédentes, dans lequel l'au moins un appareil de régulation est configuré pour transmettre par l'intermédiaire de l'au moins une sortie de signal des commandes à l'au moins un actionneur, lesquelles amènent celui-ci à réaliser l'au moins une sollicitation par compression de sorte que le pourcentage volumique des micro-défauts est inférieur à un pourcentage déterminé, de préférence 50 % ou 30 %, de la valeur initiale, dans lequel cette valeur initiale correspond à la valeur qui est obtenue sans l'au moins une sollicitation par compression dans le composant plastique, dans lequel de préférence un pourcentage volumique des micro-défauts est inférieur à 0,3 % en volume, de préférence inférieur à 0,18 % en volume.

6. Dispositif selon au moins l'une des revendications précédentes avec au moins une unité de commande qui est configurée pour représenter à un opérateur, au moyen d'un programme de commande, des informations fournies par l'au moins une unité de calcul et pour transmettre des entrées de l'opérateur à l'au moins une unité de calcul, dans lequel il est de préférence prévu que le programme de commande soit configuré pour accepter des entrées d'un opérateur concernant
- une ampleur de chaque sollicitation par compression et/ou
- un nombre de sollicitations par compression et/ou
- une durée de chaque sollicitation par compression
et pour les transmettre à l'au moins une unité de calcul, laquelle en fonction de ces entrées transmet des commandes à au moins un actionneur d'une machine de moulage par injection ou presse à injection.

7. Dispositif selon au moins l'une des revendications précédentes avec au moins une entrée de signal, par l'intermédiaire de laquelle des signaux d'au moins un capteur d'une machine de moulage par injection ou presse à injection peuvent être transmis à l'au moins une unité de calcul.

8. Machine de moulage par injection ou presse à injection, laquelle est en liaison opérationnelle avec un dispositif selon au moins l'une des revendications précédentes ou présente un tel dispositif.

9. Machine de moulage par injection ou presse à injection selon la revendication précédente, dans laquelle le cylindre d'injection est formé par un cylindre de plastification dans lequel un actionneur est disposé sous la forme d'au moins une vis de plastification montée mobile et rotative, dans laquelle l'au moins un appareil de régulation est configuré pour transmettre par l'intermédiaire de l'au moins une sortie de signal des commandes à l'au moins une vis de plastification, lesquelles amènent celle-ci réaliser l'au moins une sollicitation par compression avant une injection par l'intermédiaire
- d'un déplacement de l'au moins une vis de plastification et/ou
- d'une rotation de l'au moins une vis de plastification.

10. Procédé de fabrication d'un nombre prédéfini de pièces plastiques, en particulier d'éléments optiques, par moulage par injection de matière plastique ou pressage par injection de matière plastique au moyen d'une machine de moulage par injection ou presse à injection, comprenant au moins les étapes suivantes :
- la fourniture d'une masse fondue dans un cylindre d'injection de la machine de moulage par injection ou presse à injection en une quantité, laquelle est adaptée au nombre de pièces plastiques à fabriquer
- la réalisation d'au moins une sollicitation par compression de la masse fondue dosée dans le cylindre d'injection
- l'injection de la masse fondue dosée dans au moins un outil pour la fabrication du nombre prédéfini de pièces plastiques
dans lequel l'étape de l'au moins une sollicitation par compression de la masse fondue dans le cylindre d'injection avant l'injection concernant
- une ampleur de chaque sollicitation par compression et/ou
- le nombre de sollicitations par compression réalisées et/ou
- la durée de chaque sollicitation par compression
est choisie de sorte qu'une réduction des micro-défauts (5) est obtenue.

11. Procédé selon la revendication précédente, dans lequel l'étape de l'au moins une sollicitation par compression de la masse fondue dans le cylindre d'injection est réalisée de sorte que des micro-défauts en dessous d'une valeur limite prédéfinie soient présents dans les pièces plastiques fabriquées.

12. Procédé selon l'une des deux revendications précédentes, dans lequel on utilise :
- un nombre d'une sollicitation par compression, de deux ou trois sollicitations par compression de la même masse fondue dans un et même cycle d'injection et/ou
- une ampleur de 100 %, de préférence 150 %, de manière particulièrement préférée 200 %, mesurée à l'ampleur de la pression dynamique pendant le dosage et/ou
- une durée totale dans une plage d'environ 2,5 à 3,5 secondes, de préférence 2,9 à 3,1 secondes, de préférence une durée totale de 3 secondes.

13. Procédé selon l'une des deux revendications précédentes, dans lequel la valeur limite prédéfinie se rapporte à un pourcentage volumique des micro-défauts et le pourcentage volumique des micro-défauts est inférieur à un pourcentage déterminé, de préférence 50 % ou 30 %, de la valeur initiale, dans lequel cette valeur initiale correspond à la valeur qui est obtenue sans l'au moins une sollicitation par compression dans le composant plastique, et est de préférence égale à 0,3 % en volume, de préférence 0,18 % en volume.

14. Procédé selon au moins l'une des revendications précédentes, dans lequel l'au moins une sollicitation par compression est réalisée par l'intermédiaire
- d'un déplacement et/ou
- d'une rotation
d'au moins une vis de plastification de la machine de moulage par injection ou presse à injection.

15. Programme informatique, comprenant des commandes qui, lors de l'exécution du programme, amènent un ordinateur à exécuter le procédé selon au moins l'une des revendications 10 à 14 au moyen du dispositif selon au moins l'une des revendications 1 à 7.

16. Signal de support de données, que le produit-programme d'ordinateur selon la revendication précédente transmet.
